# EUROPÄISCHE PATENTSCHRIFT

(11) **EP 3 174 651 B1**
(45) Veröffentlichungstag und Bekanntmachung des Hinweises auf die Patenterteilung: **17.06.2020**
(21) Anmeldenummer: 15766738.7
(22) Anmeldetag: 30.07.2015
(51) Int. Cl.: B29C 64/165, B28B 7/34, B29C 33/38, B33Y 40/00, B33Y 80/00, B28B 7/36, B28B 7/38

(54) **VERFAHREN UND GUSSFORM, INSBESONDERE ZUR VERWENDUNG IN KALTGUSSVERFAHREN**
METHOD AND CASTING MOULD, IN PARTICULAR FOR USE IN COLD CASTING METHODS
PROCÉDÉ ET MOULE DE FONTE S'UTILISANT EN PARTICULIER DANS UN PROCÉDÉ DE REPRISE

(30) Priorität: 02.08.2014 DE 102014001236
(43) Veröffentlichungstag der Anmeldung: 07.06.2017
(73) Patentinhaber: voxeljet AG, 86316 Friedberg (DE)
(72) Erfinder: EDERER, Ingo, 82269 Geltendorf (DE); GÜNTHER, Daniel, 81371 München (DE); GRUBER, Anton, 86405 Meitingen (DE)
(74) Vertreter: Helbig, Christian
(86) Internationale Anmeldenummer: PCT/DE2015/000378
(87) Internationale Veröffentlichungsnummer: WO 2016/019937

(56) Entgegenhaltungen:
- EP-A1- 1 974 838
- WO-A1-97/28909
- WO-A1-2014/131388
- JP-A- 2004 082 206
- US-A- 6 112 804

## Beschreibung

Die vorliegende Erfindung bezieht sich auf eine Gussform, die mittels eines pulverbasierten Schichtbauverfahrens hergestellt Ist, eine Verwendung der Gussform, sowie ein Verfahren zu deren Herstellung.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einer Flüssigkeit bedruckt. Im mit der Flüssigkeit bedruckten Bereich verbinden sich die Partikel und der Bereich verfestigt unter dem Einfluss der Flüssigkeit und gegebenenfalls eines zusätzlichen Härters. Anschließend wir die Plattform um eine Schichtdicke In einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht Ist. Aus den bedruckten und verfestigten Bereichen entsteht so ein dreidimensionales Objekt.

Dieses aus verfestigtem Partikelmaterial hergestellte Objekt Ist nach seiner Fertigstellung In losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

Das 3D-Drucken auf Basis pulverförmiger Werkstoffe und Eintrag von Flüssigkeiten mit einem Druckkopf ist unter den Schichtbautechniken das schnellste Verfahren.

Mit diesem Verfahren lassen sich verschiedene Partikelmaterialien, dazu zählen - nicht erschöpfend - natürliche biologische Rohstoffe, polymere Kunststoffe, Metalle, Keramiken und Sande, verarbeiten.

Die Stärken des vorgestellten Verfahrens liegen In der hohen Volumenleistung und In der kostengünstigen Produktion. Die Werkstoffeigenschaften bleiben aber oft hinter denen, die von der konventionellen Fertigung her bekannt sind, zurück.

So kann beisplelswelse ein Werkstoff erzeugt werden, der als Grundmaterial Sandpartikel nutzt und durch Zement gebunden Ist, Dieser Werkstoff stellt eine Art Beton dar. Die Festigkelt eines solchen Werkstoffes ist allerdings auf Grund seiner Porosität wesentlich geringer, als von konventionell erstelltem Beton bekannt Ist.

Ebenso können Sandpartikel mit anderen Bindesystemen durch das Pulverbasierte 3D-Drucken verarbeitet werden. Hierzu zählt unter anderem die Kaltharzbindung, die Im Gießereiwesen wie auch Im 3D-Druck zur Anwendung kommt.

Auch anorganische Bindemittel sind in diesem Bereich Stand der Technik. Diese sind im Gießereiwesen die umweltfreundliche Alternative zum Kaltharzbinder.

Auch diese Werkstoffe erzielen direkt keine z.B. für das Bauwesen relevanten Festigkeiten. Grundsätzlich können nur wenige Werkstoffe über das Pulverbasierte 3D-Druckverfahren zu dichten und hochfesten Werkstoffen verarbeitet werden. Im Wesentlichen sind dies Polymere.

Ein Ausweg aus dieser Einschränkung des 3D-Drucks stellt die Verwendung zweistufiger Verfahren dar. Hierbei bietet sich das Gießen In 3D-gedruckte Formen an, Dieses Verfahren stellt im Bereich Metallgleßen den Stand der Technik dar.

Im Bereich von Betonwerkstoffen oder kalt-vergießbaren Polymeren ist die Verarbeitung unter Verwendung 3-D gedruckter Formen bel Gussverfahren nicht üblich, Einerseits liegt dies an der mangelnden Entform- und Entkernbarkeit, die Insbesondere aufgrund der fehlenden, festigkeltsverringernden Wirkung von Hitze beim Kaltgiessen. Andererseits kann sich beim Kalgießen eine ungewollte Verbindung des Gussmaterials mit der Form aufbauen, da eine 3-D gedruckte Gussform für Kaltgussverfahren eine relativ hohe Porosität aufweist, in die das Gussmaterial eindringen kann

Aus dem Stand der Technik ist es bekannt, dass zum Gießen von Betonteilen in der Regel wieder verwendbare Formen verwendet werden.

Beim Guss von geraden Wänden werden als Schalung beispielsweise beschichtete Holzbretter benutzt. Diese werden zusätzlich durch ein Schalungsöl weiter vorbehandelt und so ein Anhaften des Betons an die mehrfach verwendbaren Bretter zu verhindern.

Zum Ausschalen werden diese Bretter nach dem Giessen meist schälend mit Hammerschlägen vom Betonteil gelöst.

Komplexere Formen aus Beton werden oft über Silikonformen erzeugt. Hierbei liegt die Silikonform als Negativmodell vor. Die Form muss In diesem Fall aufwändig über ein Modell gefertigt werden, das dann als Positiv für den Silikonabguss dient. Ein solches Modell kann z.B. über konventionelle Techniken, wie beispielsweise Fräsen in Holz oder Kunststoff oder additive Verfahren produziert werden. Um der Silikongussform die nötige Festigkeit zu verleihen, Ist eine zusätzliche Unterbaukonstruktion erforderlich, die das Verfahren noch aufwändiger gestaltet. Wie auch belden Schalungsbrettern wird auf die Silikongussformen vor dem Guss häufig ein Trennmittel aufgebracht.

Die Silikonform kann dann nach Verfestigung des Gussmaterials durch einfaches Abziehen von der Form getrennt werden. Dafür muss aber zuerst die Unterbaukonstruktion entfernt werden.

Diese beiden Methoden sind für Formen, die mittels pulverbasiertem 3D-Druck mit Kaitharzbinder erstellt worden sind, nicht anwendbar.

Durch die Porosität der Formen bedingt, sind konventionelle Trennmittel nicht In der Lage, das Eindringen des Gusswerkstoffes in die Form zu verhindern. Die Trennmittel infiltrieren vielmehr das Formtell und ziehen In den inneren Bereich ohne oberflächlich wirksam zu werden.

Das Dokument WO-A-9728909 offenbart eine Gussform zur Verwendung in Kaltgussverfahren, die mittels eines pulverbasierten Schichtbauverfahrens mit einem Kaltharzbinder hergestellt ist, wobei die endgültige Gussform eine mit einer Versiegelung behandelte Oberfläche aufweist, die die oberflächlichen Poren des Formkörpers verschließt.

Im Folgenden werden einige Begriffe der Erfindung näher erläutert.

Im Sinne der Offenbarung sind "3D-Druckverfahren" alle aus dem Stand der Technik bekannten Verfahren, die den Aufbau von Bautellen als dreidimensionale Formen ermöglichen, und mit den beschriebenen Verfahrenskomponenten und Vorrichtungen kompatibel sind. Die Erfindung bezieht sich auf ein 3D-Druckverfahren im Sinne der Ansprüche.

"Selektiver Binderauftrag" oder "Selektiver Bindersystemauftrag" kann 1m Sinne der Erfindung nach jedem Partikelmaterialauftrag erfolgen oder je nach den Erfordernissen des Formkörpers und zur Optimierung der Formkörperherstellung auch unregelmäßig erfolgen, d.h. nicht linear und parallel nach jedem Partikelmaterialauftrag. "Selektiver Binderauftrag" oder "Selektiver Bindersystemauftrag" kann somit individuell und Im Verlauf der Formkörperherstellung eingestellt werden.

"Formkörper" oder "Bauteil" Im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

Als "Partikelmateriallen" wird Sand verwendet.

"Bauraum" Ist der geometrische Ort in dem die Partikelmaterialschüttung während des Bauprozesses durch wiederholtes Beschichten mit Partikelmaterial wächst. Im Allgemeinen wird der Bauraum durch einen Boden, die Bauplattform, durch Wände und eine offene Deckfläche, die Bauebene, begrenzt.

"Gusswerkstoff" ist Im Sinne dieser Erfinder jeder vergießbare Werkstoff, Insbesondere solche bei deren Verarbeitung keine Temperaturen auftreten, die eine Kaltharzbindung schwächen könnten und somit ein Entformen begünstigen.

Ein "Betonwerkstoff" im Sinne dieser Erfindung ist ein Gemisch aus einem Zuschlagsstoff (z.B. Sand und/oder Kies oder dergleichen) und einem hydraulischen Bindemittel, wobei das Anmachwasser durch die Verfestigungsreaktion verbraucht wird. Ein Betonwerkstoff ist ebenfalls ein möglicher Gusswerkstoff.

Die "Porosität" ist Im Sinne der Erfindung eine Labyrinthstruktur von Hohlräumen, die zwischen den im 3D-Druckprozess verbundenen Partikein entsteht.

Die "Versiegelung" wirkt an der geometrischen Grenze zwischen gedruckter Form und dem zu füllenden Hohlraum. Sie verschließt oberflächlich die Poren des porösen Formkörpers.

Als "Schlichte" wird eine Flüssigkeit bezeichnet, die Partikel enthält und die Porosität nicht verschließt sondern lediglich den Porendurchmesser an der Oberfläche der Form verringert.

"Hydrostatischer Druck" wird als Oberbegriff für alle durch die Wirkung der Flüssigkeltssäule des Gusswerkstoffes entstehenden Drücke verwendet.

"Niedrige Festigkeit" bezogen auf die Versiegelung bedeutet, dass die Versiegelung bei der Entformung keine größeren Kräfte entgegensetzt.

Unter "Kaltgussverfahren" sind Insbesondere Gießverfahren zu verstehen, bei denen vor, während und nach dem Guss die Temperatur der Gussform und des Kernes die Zersetzungs- oder Erweichungstemperatur des Formmaterials nicht erreicht. Dabei wird die Festigkeit der Form durch den Guss nicht beeinflusst. Gegensätzlich dazu wären Metallgussverfahren, bei denen die Form Im Allgemeinen durch die heiße Gussmasse langsam zerstört wird.

Mit dem Begriff "Behandelte Oberfläche" wird eine Oberfläche der Gussform bezelchnet, die nach dem Drucken und Reinigen der Form in einem vorzugsweise eigenem Schritt behandelt wird. Diese Behandlung ist häufig ein Auftragen eines Stoffes auf die Oberfläche und damit auch In die oberflächennahen Bereiche der Form oder des Kerns. Für das Auftragen kommen dabei alle erdenklichen verschiedene Verfahren in Betracht.

Es Ist Insbesondere für komplexere Formen in wirtschaftlicher Hinsicht wünschenswert, Gussformen für den Kaltguss über 3D-gedruckte Formen zu realisieren.

Der Kern der vorliegenden Offenbarung Ist eine Gussform bereitzustellen, Insbesondere zur Verwendung In Kaltgussverfahren, die mittels eines pulverbasierten Schichtbauverfahrens hergestellt Ist, wobei die endgültige Gussform eine behandelte Oberfläche aufweist.

Die Erfindung ist gerichtet auf eine Mehrweggussform zur Verwendung in Kaltgussverfahren, die mittels eines pulverbasierten Schichtbauverfahrens mit einem Sand und mit einem Kaltharzbinder hergestellt ist, wobei Sand mit einer Aktivatorkomponente vorbeschichtet und nach einem Beschichtungsprozess mittels eines Tintenstrahldruckkopfes mit einer Flüssigkeit bedruckt wird, wobei die Flüssigkeit mit dem Aktivator im Partikelmaterial zu einem Polymer reagiert, wobei die endgültige Gussform eine mit einer Versiegelung behandelte Oberfläche aufweist, die die oberflächlichen Poren des Formkörpers verschließt und wobei die Versiegelung die Oberfläche wasserdicht abschließt,

Die Erfindung ist in einem anderen Aspekt gerichtet auf die Verwendung der oben genannten Mehrweggussform zur Herstellung von Betongusstellen und/oder kaltgegossenen Polymerbauteilen.

Die Erfindung Ist In einem anderen Aspekt gerichtet auf ein Verfahren zur Herstellung von Mehrweggussformen zur Verwendung In Kaltgussverfahren, wobei die Gussform mittels eines pulverbasiertes Schichtbauverfahrens mit einem Sand und mit einem Kaltharzbinder hergestellt wird, wobei Sand mit einem Aktivatorkomponente vorbeschichtet und nach einem Beschichtungsprozess mittels eines Tintenstrahldruckkopfes mit einer Flüssigkeit bedruckt wird, wobei die Flüssigkeit mit dem Aktivator im Partikelmaterial zu einem Polymer reagiert und die Oberfläche der Gussform mit einer Versiegelung behandelt wird, die die oberflächlichen Poren des Formkörpers verschließt und wobei die Versiegelung die Oberfläche wasserdicht abschließt.

Die behandelte Oberfläche kann dabei beispielsweise verhindern, dass Gusswerkstoffes in den Formkörper auf Grund des hydrostatischen Druckes oder kapillarer Effekte eindringt.

Darüberhinaus könnte es auch sein, dass die Kräfte beim Entformen poröser Körper durch die Behandlung der Oberfläche gering sind, da die Versieglung durch den Entformvorgang aus den Poren des porösen Formwerkstoffes gezogen werden kann und dann durch die poröse Form Luft nachströmen kann.

Im folgenden werden bevorzugte Ausführungsformen der Offenabrung dargestellt.

Gemäß der Offenbarung umfasst die behandelte Oberfläche eine Versiegelung, eine Beschichtung, eine Bearbeitung und/oder eine sonstige Behandlung.

Die behandelte Oberfläche sollte dabei vorzugsweise eine geringere Porosität als die Gussform nach der Herstellung mittels Schichtbauverfahren aufweisen.

In einem weiteren Aspekt betrifft die Erfindung eine Verwendung der Gussform nach der Erfindung zur Herstellung von kalt gegossenen Gussteilen als verlorene Gussform und/oder als Dauergussform. Insbesondere können die Gussformen nach der Erfindung zur Herstellung von Betongussteilen und/oder kaltgegossenen Polymerbauteilen verwendet werden.

In einem noch weiteren Aspekt betrifft die vorliegende Erfindung ein Verfahren zur Herstellung von Gussformen, Insbesondere zur Verwendung In Kaltgussverfahren, wobei die Gussform mittels eines pulverbasiertes Schichtbauverfahrens mit einem Sand und mit einem Kaltharzbinder hergestellt wird, wobei Sand mit einem Aktivatorkomponente vorbeschichtet und nach einem Beschichtungsprozess mittels eines Tintenstrahldruckkopfes mit einer Flüssigkeit bedruckt wird, wobei die Flüssigkeit mit dem Aktivator Im Partikelmaterial zu einem Polymer reagiert und die Oberfläche der Gussform mit einer Versiegelung behandelt wird, die die oberflächlichen Poren des Formkörpers verschließt und wobei die Versiegelung die Oberfläche wasserdicht abschließt.

Für das Schichtbauverfahren wird ein Pulverbett-baslertes 3D-Druckverfahren eingesetzt und wird eine Kaltharzbindung verwendet.

Wird die Oberfläche ggf. zusätzlich mit einem hydrophoben Material versiegelt, kann das Eindringen des Gussmaterials in die Poren der Gussform gut eingeschränkt werden.

Eine weitere Möglichkeit ist, die Porosität der Oberfläche der Gussform durch ein Infiltrat zu verändern.

Dies kann beispielsweise durch ein Epoxidharz, ein Polyurethan, ein ungesättigter Polyester, ein Phenol/Resolharz, ein Acrylat und/oder ein Polystyrol erfolgen.

Weiterhin ist es möglich die Porosität der Oberfläche durch eine Schlichte und/oder Dispersion zu verändern, Insbesondere eine zirkonoxid-, aluminiumoxid-, calciumoxid-, titanoxld-, kreide- oder kleselsäure-basierte Schlichte und/oder eine kunststoff-, cellulose-, zucker-, mehl- und/oder salzbasierte Lösung.

Darüber hinaus kann die Porosität der Oberfläche durch ein Fett, Öl, Wachs und/oder warmwasserlösliche Stoffe verändert bzw. versiegelt werden.

Kurze Beschreibung der Figuren, die bevorzugte Ausführungsformen darstellen:
Figur 1: Schematische Darstellung der Komponenten eines pulverbasierten 3D-Druckers als geschnittener Schrägriss.
Figur 2: Darstellung eines einfachen Gussteils ohne Hinterschneidung
Figur 3: Darstellung eines komplexen Gussteils mit Hinterschneidungen
Figur 4: Darstellung eines mehrfach verwendbaren Formsatzes für die Erstellung des einfachen Gussteils

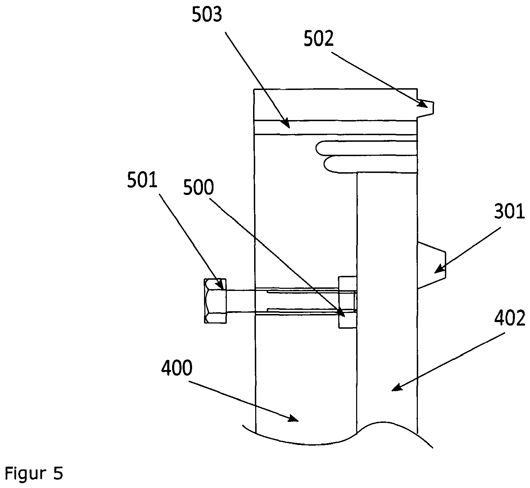

Figur 5: Schnittdarstellung von Auswerfern und Montagehilfen für mehrfach verwendbare Gussform

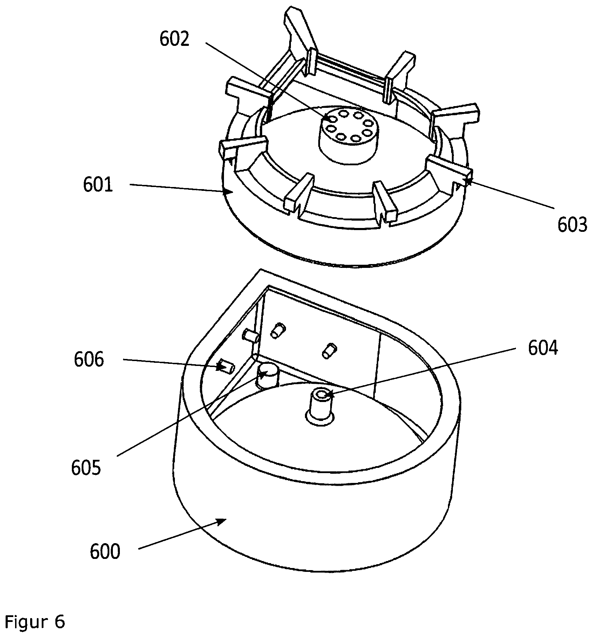

Figur 6: Darstellung eines Einmal-Formsatzes für die Erstellung des komplexen Gussteils
Figur 7: Schnitt durch ein erfindungsgemäß behandeltes Bautell
Figur 8: Illustration des Entformvorganges mit einer erfindungsgemäßen Behandlung

### Ausführungsbeispiele

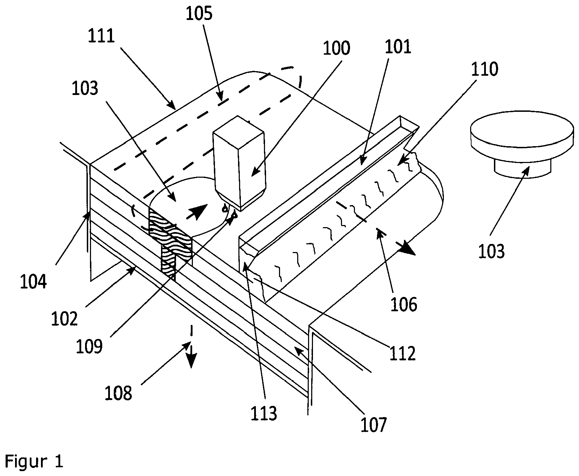

Eine beispielhafte Vorrichtung zum Erzeugen eines Formteils gemäss der vorliegenden Erfindung weist einen Pulverbeschichter (101) auf. Mit diesem wird Partikelmaterial auf eine Bauplattform (102) aufgebracht und geglättet (Figur 1). Das aufgebrachte Partikelmaterial kann aus verschiedensten Materiallen bestehen, erfindungsgemäß bevorzugt auf Grund der geringen Kosten ist allerdings Sand. Dieser ist beispielsweise mit einer Aktivator-Komponente vorbeschichtet. Die Höhe der Pulverschichten (107) wird durch die Bauplattform (102) bestimmt. Sie wird nach dem Aufbringen einer Schicht abgesenkt. Beim nächsten Beschichtungsvorgang wird das entstandene Volumen verfüllt und der Überstand glattgestrichen. Das Ergebnis Ist eine nahezu perfekt parallele und glatte Schicht definierter Höhe.

Nach einem Beschichtungsprozess wird die Schicht mittels eines Tintenstrahidruckkopfes (100) mit einer Flüssigkeit bedruckt. Das Druckbild entspricht dem Schnitt durch das Bautellin der aktuellen Bauhöhe der Vorrichtung. Die Flüssigkeit trifft auf das Partikelmaterial und diffundiert langsam hinein.

Zusammen mit dem Aktivator im partikelmaterial reagiert die Flüssigkeit zu einem Polymer. Dieses verbindet die Partikel untereinander.

Im nächsten Schritt wird die Bauplattform (102) um eine Schichtstärke abgesenkt. Die Schritte Schichtbilden, Bedrucken, und Absenken werden nun solange wiederholt bis das gewünschte Bautell (103) vollständig erstellt Ist.

Das Bauteil (103) liegt jetzt vollständig Im Pulverkuchen (602) vor. Im letzten Schritt wird das Bauteil vom losen Partikelmaterial befreit und mit Druckluft gereinigt.

Ein so erzeugtes Bauteil ist die Grundlage für die vorliegende Erfindung. Die Mehrwegformen der Erfindung können Verwendung In Kaltgussverfahren finden.

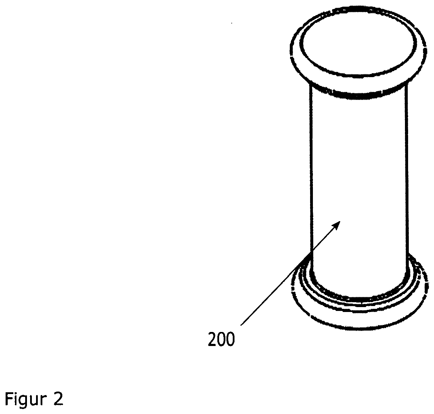

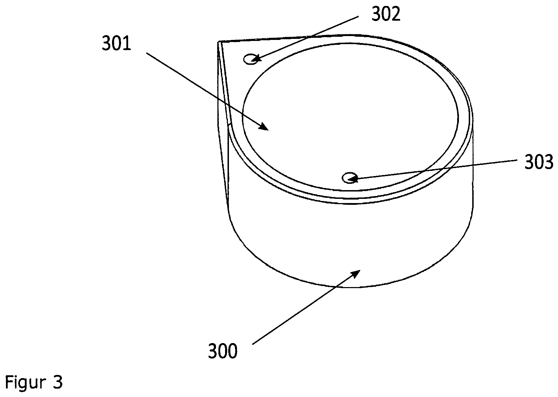

Die Figur 2 zeigt ein einfaches Gusstell (200). Hierbei Ist es wirtschaftlich, mehrere Abgüsse mit einer Form zu erzielen. Ein größeres und komplexeres Bautell stellt z.B. ein Waschbecken (300) In Figur 3 dar. Das Waschbecken weist in der Mitte eine schalenartige Ausformung (301) auf. Im deren Zentrum sitzt ein Öffnung (303) für den späteren WasserAblauf. Am rechteckig ausgeformten Teil des Beckens befindet sich ein weitere Öffnung (302) für den Wasserhahn.

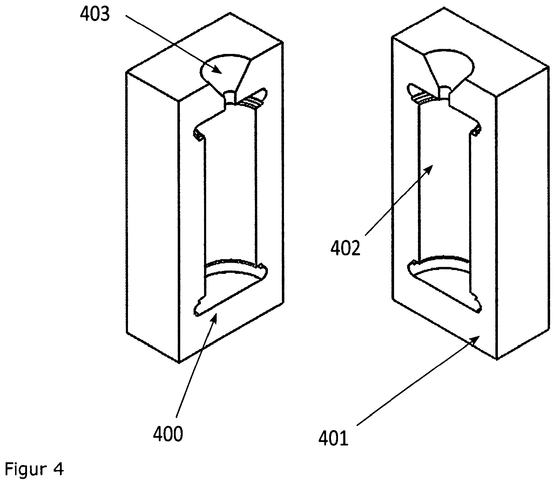

Eine Mehrwegform zeigt die Figur 4. Sie besteht aus zwei Hälften (400, 401) die jeweils dickwandig ausgeführt sind und In den der Hohlraum (402) für das Gussmaterial eingearbeitet Ist. Zusätzlich Ist ein Eingusstrichter (403) vorgesehen.

Die Form (400,401; 600,601) kann beispielsweise aus einem Sand mit einer mittleren Korngröße von 140µm erzeugt werden, der mit einem Härter für ein sogenanntes Kaltharzin Höhe von 0,3 Gew.-% vorgemischt wurde. Die Bindung erfolgt bevorzugt mit einem Anteil des Kaltharzes im Bereich von 1,0 - 2,5 Gew.-%.

Nach dem Druckprozess kann die Form aus dem losen Sand entnommen und gereinigt werden.

Um die Porengröße zu verändern, können verschiedene Maßnahmen angewendet werden. Zum Beispiel ist eine Infiltration mit einem ZweiKomponenten-Polymer möglich. Das Material muss allerdings so verwendet werden, dass sich erfindungsgemäß nach der Behandlung noch Poren auf der Oberfläche befinden die ein einfaches Entformen ermöglichen. Für diesen Zweck wird die Form beispielsweise mit einer angepassten Versiegelung behandelt, die bei Raumtemperatur zu verarbeiten ist und keine hohen Festigkeiten entwickeit.

Ebenso ist es möglich zusätzlich eine Schlichte aus dem Metallgussbereich zu verwenden. Hierbei werden kleinere Partikel auf die Oberfläche aufgebracht. Dadurch verändert sich der effektive Porenquerschnitt. Damit kann z.B. verhindert werden, dass die erfindungsgemäß mechanisch schwache Versiegelung durch hohe hydrostatische Drücke In die Form gedrückt wird.

Als einfache erfindungsgemäße Versiegelung kann Fett verwendet werden. Das Fett kann durch Aufstreichen oder Aufsprühen auf die Form aufgetragen werden. Das Fett muss für die Aufgabe passend ausgewählt werden. Ein zu stelfes Fett kann nur schwer verarbeitet werden. Ein zu dünnes Fett oder Öl infiltriert In die Form und bietet damit keine Versiegelungsfunktion mehr.

Nach dem Aufstreichen oder Pinsein kann das Fett zusätzlich geglättet werden. Dazu eignet sich eine oberflächliche Temperaturanwendung. Diese kann beispielsweise mit einem Heißluftfön oder einem Gasbrenner erfolgen. Ein Durchwärmen der Form ist hierbel nicht wünschenswert, da sonst Undichtigkelten In der Versiegelung zu befürchten sind.

Ebenso ist der Einsatz von Wachs erfindungsgemäß möglich. Zweckmäßigerwelse wird das Wachs für die Verarbeitung durch Erwärmung verflüssigt. Die niedrige Viskosität muss durch einen Andicker erhöht werden, beispielsweise können dazu Polystyrol-Mikrogranulate verwendet werden. Ebenso ist es möglich, mit hydrophoben Lösemitteln wie den Alkanen oder Benzin eine Wachslösung zu erstellen, deren Viskosität gut eingestellt werden kann.

Auch kann eine Versiegelung aus helßwasserlöslichem Polyvinylalkohol erfolgen. Dieses Material wird in heißem Wasser gelöst und auf die vorher erwärmte Form aufgetragen. Das Anmachwasser eines Betons kann die Versiegelung nicht angreifen.

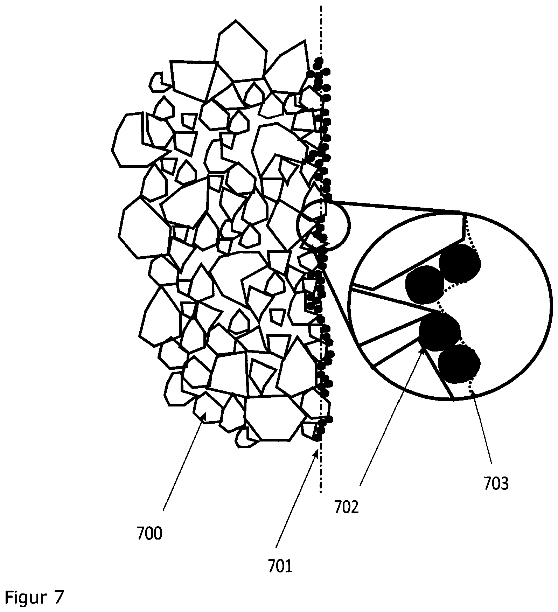

Figur 7 gibt die Verhältnisse auf mikroskopischer Ebene wieder. Der Formkörper ist durch Partikel (700) aufgebaut die miteinander verbunden sind. An der geometrischen Bauteilgrenze (701) sammeln sich Im Falle eines geschlichteten Bauteils feine Partikel (702). Die Versiegelung (703) schließt die Oberfläche wasserdicht ab.

Die so vorbereiteten Formen werden Im Anschluss mit weiteren Funktionsbauteilen ausgerüstet.

So können beispielweise In mehrfach verwendbare Formen Auswerfer (500,501) zur einfacheren Entformung eingelegt werden. Je nach erwarteten Entformkräften Ist der Sitz der Auswerfer In der gedruckten Form vorher z.B. durch eine Epoxidharzinfiltration verstärkt worden. Die Auswerfer können als Schrauben (501) ausgeführt sein, die In eine in das Druckteil versenkbare Mutter (500) greifen. Durch Aufbringen eines Drehmomentes auf die Schraube wird dann eine Kraft zwischen Form und Gussteil erzeugt.

Ebenso kann die Form mit Zentrierstiften versehen werden. Diese sorgen für einen möglichst geringen Versatz der Formhälften und somit für ein präzises Gusstell,

Manche von Metaligussformen bekannte Strukturen können am Druckteil direkt mit vorgesehen werden. So können Zentrierungen (301) ausgeführt werden und auch Labyrinthe (502) für eine bessere Dichtwirkung zwischen den Formhälften ankonstruiert werden.

Vor dem Schließen der Formen wird die Armierung in den Formhohlraum (402) eingelegt. Diese wird zweckmäßigerweise mit Kunststoff- oder Beton-Stützen relativ zur Form auf Abstand gehalten. In diesem Zustand können auch Leerrohre für die spätere Einbringung elektrischer Leitungen oder anderer Medien in die Form eingelegt werden.

Die Montage der Formen kann durch Bohrungen (502) in der Formen erleichtert werden. Hierdurch können Schrauben geführt werden, die Druckkräfte gezielt auf kritische Formbereiche ausüben, Ebenso können zusätzliche Platten mit angeschraubt werden, die die Form gegen die Gusskräfte aussteifen.

Der Guss erfolgt durch ankonstruierte Trichter (402) oder Materialschächte. Je nach Technik und verwendetem Gussmaterial werden zusätzlich Entlüftungsbohrungen (602) eingebracht. Soll eine Rüttelflasche zur Verdichtung des Gusswerkstoffes nach dem Guss eingeführt werden, wird ein Zugang in der Form vorgesehen. Formtelle, (z.B. 601) die durch den Druck des Gussmaterials aufschwimmen können, müssen z.B. durch Beschweren gegen eine Lageänderung gesichert werden.

Nach dem Guss ruht das Teil je nach Abbindezelt des Gussmaterials bis zu mehreren Tagen. Dann erfolgt der Ausformvorgang.

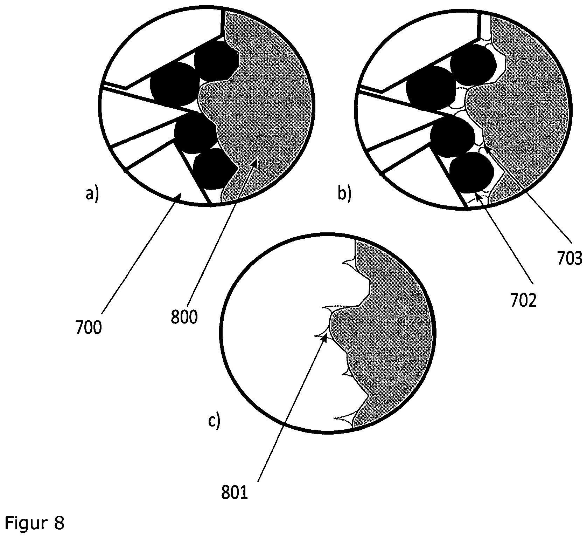

Durch die geringe Festigkelt der Versiegelung wird diese beim Entformen leicht aus den Poren der Form gezogen (siehe Figur 8). Dieser Vorgang kann durch ein Erwärmen der Form mit dem Gussteil unterstützt werden. In Folge der geringen Trennkräfte können auch filigrane Gusstelle sicher entformt werden.

Die Mehrwegform wird vor dem Entformen bevorzugt in einen Ofen verbracht und beispielswelse bei 60°C über Nacht erwärmt. Dabei ist Luftzirkulation zu vermeiden, um Im Fall von Beton als Gusswerkstoff ein Austrocknen zu verhindern,

Nach dem Ofenprozess wird die Verbindung zwischen Form und Gussteil durch Anziehen der Schrauben an den Auswerfern unter Spannung gesetzt, Meist öffnet sich die Form dann durch leichte Vibrationen oder Hammerschläge.

Im Anschluss an den Guss muss das Gussteil (800) vom Versiegelungsmedium (801) befreit werden. Im Fall von Fett sind hier Seifen und Waschpasten zur Reinigung von Ölen und Fetten hilfreich. Besonders bevorzugt Ist hier Handwaschpaste mit Reinigungspartikeln.

Nach dem Abguss werden die Teile wle bei der konventionellen Fertigung weiterverarbeitet. Hierbei werden die üblichen Verfahren wie Schleifen oder Sandstrahlen zur Oberflächenmodifikation genutzt.

### BezugszeiChenliste

- 100: Druckkopf
- 101: Beschichter
- 102: Bauplattform
- 103: Bauteil
- 104: Baubehälter
- 105: Druckkopfbahn
- 106: Beschichterbahn
- 107: Pulverschichten
- 108: Richtung der Bauplattformbewegung
- 109: Dosierte Tropfen
- 110: Pulverwalze
- 111: Baufeldberandung
- 112: Beschichterspalt
- 113: Beschichtervorrat
- 200: Einfaches Gussteil
- 300: Komplexes Gussteil Waschbecken
- 301: Schalenartiger Waschbeckenbereich
- 302: Loch für Wasserhahn
- 303: Loch für Abfluss
- 400: Gussform Oberkasten
- 401: Gussform Unterkasten
- 402: Hohlraum für Gussmaterial
- 403: Eingusstrichter
- 500: Schraubenmutter
- 501: Schraube
- 502: Dichtlabyrinth
- 503: Bohrung für Montageschrauben
- 600: Waschbeckenform Unterkasten
- 601: Waschbeckenform Oberkasten
- 602: Entlüftungsbohrungen
- 603: Formzentrierung und Auflagepunkt
- 604: Formkern für Abfluss
- 605: Formkern für Wasserhahn
- 606: Formkerne für Wandmontage
- 700: Partikel
- 701: Geometrische Formgrenze
- 702: Partikel der Schlichte
- 703: Versiegelung
- 800: Gussteil
- 801: Herausgezogene Versiegelung

## Patentansprüche

1. Mehrweggussform zur Verwendung in Kaltgussverfahren, die mittels eines pulverbasierten Schichtbauverfahrens mit einem Sand und mit einem Kaltharzbinder hergestellt Ist, wobei Sand mit einer Aktivatorkomponente vorbeschichtet und nach einem Beschichtungsprozess mittels eines Tintenstrahidruckkopfes mit einer Flüssigkeit bedruckt wird, wobei die Flüssigkeit mit dem Aktivator im Partikelmaterial zu einem Polymer reagiert, wobei die endgültige Gussform eine mit einer Versiegelung behandelte Oberfläche aufweist, die die oberflächlichen Poren des Formkörpers verschließt und wobei die Versiegelung die Oberfläche wasserdicht abschließt.

2. Verwendung der Gussform nach Anspruch 1 zur Herstellung von Betongussteilen und/oder kaltgegossenen Polymerbauteilen.

3. Verfahren zur Herstellung von Mehrweggussformen zur Verwendung in Kaltgussverfahren,
wobei die Gussform mittels eines pulverbasiertes Schichtbauverfahrens mit einem Sand und mit einem Kaltharzbinder hergestellt wird, wobei Sand mit einem Aktivatorkomponente vorbeschichtet und nach einem Beschichtungsprozess mittels eines Tintenstrahldruckkopfes mit einer Flüssigkeit bedruckt wird, wobei die Flüssigkeit mit dem Aktivator im Partikelmaterial zu einem Polymer reagiert und die Oberfläche der Gussform mit einer Versiegelung behandelt wird, die die oberflächlichen Poren des Formkörpers verschließt und wobei die Versiegelung die Oberfläche wasserdicht abschließt.

4. Verfahren nach Anspruch 3, wobei das Schichtbauverfahren ein Pulverbett-basiertes 3D-Druckverfahren ist,

5. Verfahren nach Anspruch 3 oder 4, wobei die Oberfläche zusätzlich mit einem hydrophoben Material versiegelt wird.

6. Verfahren nach einem der Ansprüche 3 bis 5, wobei die Porosität der Oberfläche durch ein Infiltrat verändert wird.

7. Verfahren nach einem der Ansprüche 3 bis 6, wobei die Porosität der Oberfläche durch ein Epoxidharz, ein Polyurethan, ein ungesättigter Polyester, ein Phenol/Resolharz, ein Acrylat und/oder ein Polystyrol verändert wird.

8. Verfahren nach einem der Ansprüche 3 bis 7, wobei die Porosität der Oberfläche durch eine Schlichte und/oder Dispersion verändert wird, Insbesondere eine zirkonoxid-, aluminlumoxid-, calciumoxid-, titanoxid-, kreide- oder kleselsäure-basierte Schlichte und/oder eine kunststoff-, cellulose-, zucker-, mehl- und/oder salzbasierte Lösung.

9. Verfahren nach einem der Ansprüche 3 bis 8, wobei die Porosität der Oberfläche durch ein Fett, Öl, Wachs und/oder warmwasserlösliche Stoffe verändert bzw. versiegelt wird.

## Claims

1. Reusable casting mould for use in cold casting methods, which is produced by means of a powder-based layer construction method using a sand and a cold resin binder, wherein the sand is pre-coated with an activator component and, after a coating process, has a liquid printed thereon by means of an inkjet print head, said liquid reacting with the activator in the particulate material to form a polymer, the final casting mould having a surface treated with a sealant which closes the surface pores of the moulded body, and the sealant sealing the surface in a watertight manner.

2. Use of the casting mould according to claim 1 for the production of cast concrete parts and/or cold-cast polymer components.

3. A method for the production of reusable casting moulds for use in cold casting methods,
wherein the casting mould is produced by means of a powder-based layer construction method using a sand and a cold resin binder, wherein the sand is pre-coated with an activator component and, after a coating process, has a liquid printed thereon by means of an ink jet print head, wherein the liquid reacts with the activator in the particulate material to form a polymer and the surface of the casting mould is treated with a sealant which closes the surface pores of the moulded body and wherein the sealant seals the surface in a watertight manner.

4. The method according to claim 3, wherein the layer construction method is a powder bed-based 3D printing method.

5. The method according to claim 3 or 4, wherein the surface is additionally sealed with a hydrophobic material.

6. The method according to any one of claims 3 to 5, wherein the porosity of the surface is changed by an infiltrate.

7. The method according to any one of claims 3 to 6, wherein the porosity of the surface is changed by an epoxy resin, a polyurethane, an unsaturated polyester, a phenol/resol resin, an acrylate and/or a polystyrene.

8. The method according to any one of claims 3 to 7, wherein the porosity of the surface is changed by a sizing agent and/or dispersion, in particular a zirconium oxide, aluminium oxide, calcium oxicide, titanium oxide, chalk or silicic acid-based sizing agent and/or a plastic-, cellulose-, sugar-, flour- and/or salt-based solution.

9. The method according to any one of claims 3 to 8, wherein the porosity of the surface is changed or sealed by a grease, oil, wax and/or hot water soluble substances.

## Revendications

1. Moule réutilisable destiné à être utilisé dans des procédés de coulée à froid, qui est fabriqué au moyen d'un procédé de construction couche par couche à base de poudre avec un sable et avec un liant à base de résine à froid, le sable étant pré-revêtu d'un composant activateur et, après un processus de revêtement, étant imprimé avec un liquide au moyen d'une tête d'impression à jet d'encre, le liquide réagissant avec l'activateur dans le matériau particulaire pour former un polymère, le moule final ayant une surface traitée avec un agent obturant qui ferme les pores de surface du corps moulé, et l'agent obturant fermant la surface de manière étanche à l'eau.

2. Utilisation du moule selon la revendication 1 pour la production de pièces moulées en béton et/ou de composants en polymère coulés à froid.

3. Procédé de fabrication de moules réutilisables destinés à être utilisés dans des procédés de coulée à froid,
dans lequel le moule est fabriqué au moyen d'un procédé de construction couche par couche à base de poudre avec un sable et avec un liant à base de résine à froid, le sable étant pré-revêtu d'un composant activateur et étant imprimé, après un processus de revêtement, avec un liquide au moyen d'une tête d'impression à jet d'encre, le liquide réagissant avec l'activateur dans le matériau particulaire pour former un polymère et la surface du moule étant traitée avec un agent obturant qui ferme les pores de surface du corps moulé et l'agent obturant fermant la surface de manière étanche à l'eau.

4. Procédé selon la revendication 3, dans lequel le procédé de construction couche par couche est un procédé d'impression 3D basé sur un lit de poudre.

5. Procédé selon la revendication 3 ou 4, dans lequel la surface est en outre obturée par un matériau hydrophobe.

6. Procédé selon l'une quelconque des revendications 3 à 5, dans lequel la porosité de la surface est modifiée par un infiltrat.

7. Procédé selon l'une quelconque des revendications 3 à 6, dans lequel la porosité de la surface est modifiée par une résine époxy, un polyuréthane, un polyester insaturé, une résine phénolique de type résol, un acrylate et/ou un polystyrène.

8. Procédé selon l'une quelconque des revendications 3 à 7, dans lequel la porosité de la surface est modifiée par un agent d'encollage et/ou une dispersion, notamment un agent d'encollage à base d'oxyde de zirconium, d'oxyde d'aluminium, d'oxyde de calcium, d'oxyde de titane, de craie ou de silice et/ou une solution à base de plastique, de cellulose, de sucre, de farine et/ou de sel.

9. Procédé selon l'une quelconque des revendications 3 à 8, dans lequel la porosité de la surface est modifiée ou obturée par une graisse, une huile, une cire et/ou des substances solubles dans l'eau chaude.
